# EUROPÄISCHE PATENTSCHRIFT

(11) **EP 2 069 155 B1**
(45) Veröffentlichungstag und Bekanntmachung des Hinweises auf die Patenterteilung: **21.12.2011**
(21) Anmeldenummer: 07787347.9
(22) Anmeldetag: 11.07.2007
(51) Int. Cl.: B60G 17/015, B60G 17/0185, B60G 17/052, H01F 7/18

(54) **VERFAHREN ZUR STEUERUNG UND/ODER REGELUNG DES NIVEAUS EINES FAHRZEUGAUFBAUS EINES KRAFTFAHRZEUGES**
METHOD FOR CONTROLLING AND/OR REGULATING THE LEVEL OF A VEHICLE BODY OF A MOTOR VEHICLE
PROCEDE DE REGULATION ET/OU DE CORRECTION DE L'ASSIETTE DE LA CAISSE D'UN VEHICULE A MOTEUR

(30) Priorität: 16.09.2006 DE 102006043608
(43) Veröffentlichungstag der Anmeldung: 17.06.2009
(73) Patentinhaber: Continental Teves AG & Co. OHG, 60488 Frankfurt (DE)
(72) Erfinder: HEIN, Dierk, 30900 Wedemark (DE)
(86) Internationale Anmeldenummer: PCT/EP2007/057073
(87) Internationale Veröffentlichungsnummer: WO 2008/031650

(56) Entgegenhaltungen:
- EP-A- 1 302 952
- EP-A2- 0 499 419
- WO-A-2005/002891
- DE-A1- 10 126 458
- DE-C2- 19 959 012
- GB-A- 2 344 323
- US-A- 4 205 307
- US-A- 6 111 514

## Beschreibung

Die Erfindung betrifft gemäß dem Oberbegriff des Anspruchs 1 ein Verfahren zur Steuerung und/oder Regelung des Niveaus eines Fahrzeugaufbaus eines Kraftfahrzeuges mittels einer Niveauregelanlage mit mindestens einem Stellglied mit dem das Niveau des Fahrzeugaufbaus durch einen Höhenänderungsvorgang veränderbar ist, mit einem dem Stellglied zugeordneten Ventil, wobei bei einem Höhenänderungsvorgang das Niveau bei geöffnetem Ventil durch Hinzufügen von Druckmittel zu dem Stellglied erweiterbar oder durch Ablassen von Druckmittel aus dem Stellglied absenkbar ist, und mit einer Steuereinheit.

Ein gattungsgemäßes Verfahren ist aus der GB 2 344 323 A bekannt. Die dort offenbarte Lösung beinhaltet ein Verfahren zur allgemeinen Prüfung der sicheren Funktion eines Luftfedersystems für ein Fahrzeug, wobei das Verfahren eine Prüfung des Systemsdrucks in unterschiedlichen Zweigen des Luftfedersystems voraussetzt. In einer Ausführungsform kann der jeweils mit einem Sensor gemessenen Drucks in einzelnen Leitungsbereichen mit Sensorsignalen eines Höhensensors verglichen bzw. korreliert werden, so dass Fehlfunktionen von Ventilen ermittelbar sind.

Ein Verfahren der eingangs genannten Art ist auch aus der Druckschrift DE19959012C2 bekannt. Das aus dieser Druckschrift bekannte Verfahren zur Steuerung und/oder Regelung des Niveaus eines Fahrzeugaufbaus eines Kraftfahrzeuges wird mittels einer Niveauregelanlage mit Stellgliedern, mit denen das Niveau des Fahrzeugaufbaus durch Ablassen eines Stellmittels aus den Stellgliedern absenkbar ist und mit einer Steuereinheit durchgeführt. Bei dem bekannten Verfahren zur Erkennung einer Fehlfunktion der Niveauregeanlage wird das Niveau des Fahrzeugaufbaus gegenüber einem Bezugspunkt ermittelt, ein Ablassvorgang eingeleitet, wenn das ermittelte Niveau über einem vorgegebenen Niveau liegt, wobei nach Einleitung des Ablassvorgangs in der Steuereinheit überprüft wird, ob sich der Fahrzeugaufbau nach einer Zeitspanne gegenüber dem unmittelbar vor dem Ablassvorgang ermittelten Niveau abgesenkt hat, und wobei die Steuereinheit den Ablassvorgang abbricht, wenn dies nicht innerhalb der Zeitspanne der Fall ist. Die Zeitspanne liegt im Bereich von mehreren Sekunden und darüber.

Nachteilig an dem bekannten Verfahren ist, dass es relativ lange dauert, bis eine fehlerhafte Funktion der Niveauregelanlage erkannt wird und das Fahrzeug innerhalb dieser Zeitspanne ggf. Schaden nehmen kann. Ein Nachteil ist auch, dass eine Fehlfunktion der Niveauregelanlage nur beim Ablassen erkannt werden kann. Weiterhin lässt das bekannte Verfahren keinen Rückschluss auf die Ursache der fehlerhaften Funktion zu und bricht den Niveauregelvorgang sofort ab und lässt ggf. keinen weiteren Niveauregelvorgang zu, da die Ursache unbekannt ist. Ein nach dem bekannten Verfahren abgebrochener Ablassvorgang kann mehrere Ursachen haben, z.B. Anheben mit einem Wagenheber, das Aufliegen auf einem Gegenstand, eine verstopfte Ablassleitung oder aber auch eine defekte Steuerleitung oder ein defektes Ventil.

Aufgabe der Erfindung ist es, ein verbessertes Verfahren zur schnellen Erkennung einer fehlerhaften Funktion einer Niveauregelanlage zu schaffen, womit sich die Fehlerursache zumindest eingrenzen lässt.

Die Aufgabe wird erfindungsgemäß durch die Merkmale des Anspruchs 1 gelöst. Die Lösung beinhaltet die folgenden Verfahrensschritte:
- das Niveau des Fahrzeugaufbaus gegenüber einem Bezugspunkt wird ermittelt,
- es wird ein Höhenänderungsvorgang eingeleitet, wenn das ermittelte Niveau unterhalb oder oberhalb eines vorgegebenen Niveaus liegt,
- nach Einleitung des Höhenänderungsvorganges wird in der Steuereinheit überprüft, ob sich das Ventil geöffnet hat, und
- die Steuereinheit bricht den Höhenänderungsvorgang ab, wenn sich das Ventil nicht oder nicht vollständig geöffnet hat, wobei das Öffnungsverhalten des Ventils aus dem Stromverlauf des Ventils ermittelbar ist.

Der Stromverlauf eines Magnetventils weist beim Öffnungsverhalten insbesondere beim Einschaltvorgang einen charakteristischen Verlauf auf, welcher von der Steuereinheit mit einfachen Mitteln und mit hoher Genauigkeit ermittelbar ist. Aus dem Stromverlauf beim Einschaltvorgang kann mit hinreichender Genauigkeit die fehlerfreie oder fehlerbehaftete Funktion eines Ventils im Vergleich zu einer Sollkurve, einem in der Steuereinheit abgespeicherten Kennlinienfeld oder einem Grenzwert des Stromes, z.B. der Steigung pro Zeiteinheit, erkannt werden.

Dies gilt auch für den Schließvorgang, wie im Ausführungsbeispiel näher beschrieben.

Jede Niveauregelanlage eines Kraftfahrzeuges weist Ventile auf, welche z.B. in der Druckmittelleitung zwischen der Druckquelle oder der Drucksenke und einem Stellglied als Sperrventile angeordnet sind, um den Zu- und Abfluss von Druckmittel zum bzw. vom Stellglied von der Druckquelle bzw. der Drucksenke steuern zu können. Weiterhin sind so genannte Umschaltventile bekannt, welche die Durchflussrichtung des Druckmittels in den Druckleitungen beeinflussen können. Ist die Niveauregelanlage als Luftfederungsanlage ausgebildet, dann werden die Luftfedern aus Komfortgründen vermehrt mit Zusatzvolumina verbunden, wobei die Zu- und Abschaltung der Verbindung zwischen dem Stellglied "Luftfeder" und dem entsprechenden Zusatzvolumen durch Ventile erfolgt. Aufgrund der schnellen und sicheren Schalttätigkeit werden für die oben genannten Aufgaben vornehmlich Magnetventile in Niveauregelanlagen eingesetzt. Diese Magnetventile werden standardmäßig stromlos geschlossen eingesetzt, es ist aber auch möglich stromlos offene Magnetventile zu verwenden.

Der Vorteil der Erfindung liegt darin, dass eine Fehlfunktion eines Magnetventils in einer Niveauregelanlage sehr schnell und ohne zusätzliche Sensoren erkannt werden kann. Ein fehlerhaftes Magnetventil kann z.B. einen Leitungsbruch in der Magnetspule, einen verklemmten oder festsitzenden Hubanker aufweisen. Die mögliche Reaktionszeit liegt im Millisekundenbereich von z.B. 10ms, mindestens aber innerhalb einer Zeitspanne von 1 Sekunde des beabsichtigten Zustandswechsels von z.B. geschlossen nach geöffnet oder umgekehrt. Es ist also eine sehr schnelle Reaktion der Niveauregelanlage auf eine Fehlfunktion möglich, um mögliche Fahrkritische Situationen oder Beschädigungen des Fahrzeuges oder von Personen durch ungewollte Niveauregelaktionen einer fehlerhaften Niveauregelanlage zu vermeiden. Als Reaktion ist eine eingeschränkte Funktionalität, je nachdem welches Ventil die erkannte Fehlfunktion aufweist, oder eine Außerbetriebnahme der Niveauregelanlage denkbar.

Gemäß der Erfindung ist weiter vorgesehen, dass das Öffnungsverhalten des Ventils aus dem Stromverlauf des Ventils zu Beginn des Einschaltvorganges ermittelbar ist. Der Vorteil ist darin zu sehen, dass die Niveauregelanlage sehr schnell auf eine fehlerhafte Funktion eines Bauteils reagieren kann und keine ungewollten Niveauregelvorgänge durchgeführt werden.

Gemäß einer Weiterbildung der Erfindung nach Anspruch 2 ist vorgesehen, der gemessene Stromverlauf des Ventils ein Maß für den Hubweg eines Ankers des Ventils darstellt. Der Anker eines Magnetventils stellt das einzig bewegliche Bauteil dieses dar und ist somit einer besonderen mechanischen Beanspruchung ausgesetzt, z.B. durch Verschleiß, Verklemmung, Verstopfung oder Festfrieren, und ist damit besonders anfällig für eine Fehlfunktion, welche mit der erfindungsgemäßen Weiterbildung der Erfindung nach Anspruch 4 schnell und sicher erkannt werden kann.

Gemäß einer Weiterbildung der Erfindung nach Anspruch 3 ist vorgesehen, dass
- das Ventil von seinem geschlossenen Zustand in den geöffneten Zustand überführt wird,
- der Stromverlauf des Ventils während des Einschaltvorgangs gemessen wird,
- der gemessene Stromverlauf in der Steuereinheit mit einer Stromsollkurve, einem Strom-Kennlinienfeld oder einem Strom-Grenzwert verglichen wird,
- anhand des Vergleichs in der Steuereinheit ermittelbar ist, ob das Ventil von dem geschlossenen in den geöffneten Zustand überführt worden ist.

Der Vorteil dieser Weiterbildung nach Anspruch 3 ist darin zu sehen, dass die Fehlfunktion eines Ventils einfach und sicher erkannt werden kann und die Zeit zur Erkennung der Fehlfunktion eines stromlos geschlossenen Ventils auf ein Minimum reduziert wird.

Gemäß einer Weiterbildung der Erfindung nach Anspruch 4 ist vorgesehen, dass das Öffnungsverhalten des Ventils aus dem Stromverlauf des Ventils während der Anzugsverzugszeit und /oder der Anzugszeit ermittelbar ist. Die Anzugsverzugszeit gibt die Zeit von dem Anlegen der Schaltspannung an das Ventil bis zum Abheben des Ankers vom ersten Ventilsitz wieder. Die Anzugszeit ist ein Maß für den Zeitpunkt, wenn der Anker vom ersten Ventilsitz abhebt, bis zum Zeitpunkt, wenn der Anker den zweiten Ventilsitz erstmals erreicht hat, und der Zustandswechsel des Ventils damit praktisch ausgeführt ist. Der Vorteil dieser Weiterbildung nach Anspruch 3 ist darin zu sehen, dass die Zeit zur Erkennung der Fehlfunktion eines insbesondere stromlos geschlossenen Ventils auf ein Minimum reduziert wird.

Ausführungsbeispiele und weitere Vorteile der Erfindung werden im Zusammenhang mit den nachstehenden Figuren erläutert, darin zeigen:
- Fig.1: eine Niveauregelanlage in schematischer Darstellung und
- Fig.2: ein Diagramm.

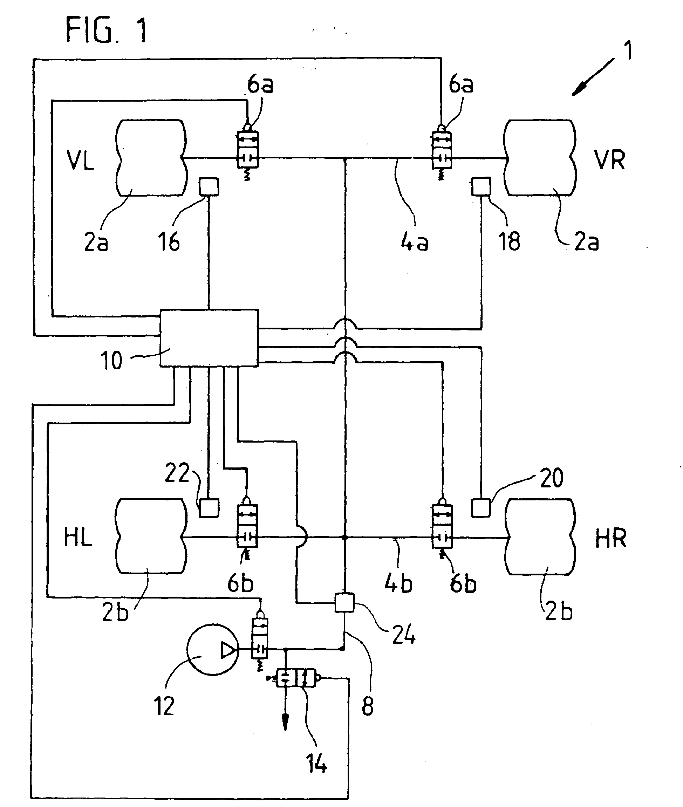

Figur 1 zeigt in stark schematisierter Darstellung eine Niveauregelanlage 1 für ein Kraftfahrzeug, wobei nur die für die nachfolgenden Erläuterungen notwendigen Bestandteile gezeigt sind. Derartige Niveauregelanlagen 1 sind an sich bekannt, so dass diese hier nur kurz erläutert werden sollen. Die Niveauregelanlage 1 verfügt über Luftfedern 2a, die der Vorderachse des Kraftfahrzeuges zugeordnet sind, und über Luftfedern 2b, die der Hinterachse des Kraftfahrzeuges zugeordnet sind. Mit den Luftfedern 2a, 2b ist ein (nicht gezeigter) Fahrzeugaufbau des Kraftfahrzeuges federnd gelagert. Die Luftfedern 2a stehen über eine Querleitung 4a und die Luftfedern 2b stehen über eine Querleitung 4b miteinander in Verbindung. Jede Querleitung 4a, 4b enthält jeweils zwei Quersperrventile 6a, 6b, von denen jeweils eins einer Luftfeder 2a, 2b zugeordnet ist. Darüber hinaus stehen die Querleitungen 4a, 4b mit einer weiteren Leitung 8 in Verbindung, über die die Luftfedern 2a, 2b mit Druckluft befüllt bzw. über die Druckluft aus den Luftfedern 2a, 2b abgelassen wird.

Zum Auffüllen der Luftfedern 2a, 2b werden die Quersperrventile 6a, 6b und das Ventil 32 von der Steuereinheit 10 der Niveauregelanlage angesteuert, so dass diese von dem in der Figur 1 gezeigten Grundzustand in ihren anderen Schaltzustand übergehen und die Querleitungen 4a und 4b "durchschalten". Daraufhin wird der Kompressor 12 von der Steuereinheit 10 angesteuert, so dass dieser Druckluft in die Luftfedern 2a, 2b fördert. Zum Abbruch des Auffüllvorganges wird der Kompressor 12 von der Steuereinheit 10 gestoppt und die Quersperrventile 6a, 6b und das Ventil 32 werden von der Steuereinheit 10 angesteuert, so dass sie den in der Figur 1 gezeigten Grundzustand einnehmen.

Zum Ablassen von Druckluft aus den Luftfedern 2a, 2b werden von der Steuereinheit 10 die Quersperrventile 6a, 6b angesteuert, so dass sie von dem in der Figur 1 gezeigten Grundzustand in den geöffneten Schaltzustand übergehen. Darüber hinaus wird von der Steuereinheit 10 das Ablassventil 14 angesteuert, so dass dieses von dem in der Figur 1 gezeigten Grundzustand in den geöffneten Schaltzustand übergeht, in dem es die Leitung 8 mit der Atmosphäre verbindet. Die Luftfedern 2a, 2b sind dann über die Quersperrleitungen 4a, 4b und über die Leitung 8 mit der Atmosphäre verbunden, so dass Druckluft aus ihnen abgelassen wird. Um einen Ablassvorgang zu beenden bzw. abzubrechen, werden die Quersperrventile 6a, 6b und das Ablassventil 14 von der Steuereinheit 10 geschlossen, so dass diese dann wieder in den in der Figur 1 gezeigten Grundzustand übergehen.

Aufgrund unterschiedlicher Achslasten und infolgedessen unterschiedlichem Druck in den Luftfedern erfolgt das Auffüllen bzw. Ablassen bevorzugt Achsweise.

Durch entsprechende Ansteuerung der Quersperrventile 6a, 6b und des Ablassventils 14 ist es ebenfalls möglich, Druckluft aus einer Luftfeder bzw. aus einer beliebigen Kombination von Luftfedern (beispielsweise den Luftfedern, die einer Achse zugeordnet sind) abzulassen. Um Druckluft aus der Luftfeder 2b, die der Radposition "hinten links" zugeordnet ist, abzulassen, muss beispielsweise das dieser Luftfeder 2b zugeordnete Quersperrventil 6b und das Ablassventil 14 von dem in der Figur 1 gezeigten Grundzustand in den geöffneten Schaltzustand überführt werden. Soll zusätzlich Luft aus der Luftfeder 2b, die der Radposition "hinten rechts" zugeordnet ist, so muss zusätzlich das dieser Luftfeder 2b zugeordnete Quersperrventil 6b von dem in der Figur 1 gezeigten und geschlossenen Grundzustand in den anderen, geöffneten Schaltzustand überführt werden.

Über die bisher genannten Bestandteile hinaus verfügt die Niveauregelanlage über Höhensensoren 16, 18, 20 und 22, von denen jeweils einer einer Luftfeder 2a, 2b der Niveauregelanlage zugeordnet ist. Mit Hilfe des Höhensensors 16 kann jederzeit das aktuelle Niveau des Fahrzeugaufbaus im Bereich der Radposition "vorne links" gegenüber einem Bezugspunkt gemessen werden. Entsprechendes gilt für die Höhensensoren 18, 20 und 22. Das von den Höhensensoren 16, 18, 20 und 22 gemessene aktuelle Niveau wird von diesen an die Steuereinheit 10 der Niveauregelanlage übermittelt und dort ausgewertet. In der Steuereinheit 10 sind also zu jedem Zeitpunkt Informationen darüber verfügbar, welches aktuelle Niveau der Fahrzeugaufbau im Bereich der Radpositionen des Kraftfahrzeuges gegenüber einem vorgegebenen Bezugspunkt einnimmt. Darüber hinaus kann in der Steuereinheit 10 ermittelt werden, welches aktuelle Niveau der Fahrzeugaufbau gegenüber einer Achse des Kraftfahrzeuges im Mittel einnimmt, indem die Messwerte der entsprechenden Höhensensoren gemittelt werden. Soll beispielsweise das Niveau des Fahrzeugaufbaus gegenüber der Hinterachse bestimmt werden, so werden in der Steuereinheit 10 die Messwerte gemittelt, die von den Höhensensoren 20 und 22 an die Steuereinheit 10 übermittelt worden sind.

In der Steuereinheit 10 wird laufend überprüft, ob das aktuelle Niveau des Fahrzeugaufbaus im Bereich einer Radposition bzw. das aktuelle Niveau des Fahrzeugaufbaus gegenüber einer Achse des Kraftfahrzeuges mit einem vorgegebenen, in der Steuereinheit 10 gespeicherten Niveau übereinstimmt (als aktuelles Niveau wird das zuletzt in der Steuereinheit 10 anhand der von den Höhensensoren 16, 18, 20 und 22 übermittelten Messsignale verstanden). Liegt das aktuelle Niveau oberhalb des in der Steuereinheit 10 gespeicherten vorgegebenen Niveaus, so leitet die Steuereinheit 10 einen Ablassvorgang ein. Dazu werden die entsprechenden Quersperrventile 6a, 6b und das Ablassventil 14, wie oben bereits erläutert, geschaltet. Der Ablassvorgang ist beendet, wenn die Steuereinheit 10 feststellt, dass das aktuelle Niveau dem in der Steuereinheit 10 gespeicherten vorgegebenen Niveau entspricht. Die Steuereinheit 10 führt dann die entsprechenden Quersperrventile 6a, 6b und das Ablassventil 14 wieder in den in der Figur 1 gezeigten Grundzustand über.

Es kann auch vorkommen, dass die Steuereinheit 10 feststellt, dass sich das Niveau des Fahrzeugaufbaus während eines Ablassvorganges nicht wie erwartet absenkt, weil sich das Kraftfahrzeug in einer kritischen Situation befindet. In diesem Fall bricht die Steuereinheit 10 den Ablassvorgang ab, wie dies weiter unten im Einzelnen erläutert wird.

Die Niveauregelanlage enthält gegebenenfalls schließlich einen Drucksensor 24, mit dem der Luftdruck in jeder einzelnen Luftfeder 2a, 2b der Niveauregelanlage messbar ist. Zur Messung des Luftdruckes in der Luftfeder 2b, die der Radposition "hinten links" zugeordnet ist, wird das dieser Luftfeder 2b zugeordnete Quersperrventil 6b von dem in der Figur 1 gezeigten, geschlossenen Grundzustand durch die Steuereinheit in den anderen, geöffneten Schaltzustand überführt, wohingegen alle anderen Ventile der Niveauregelanlage in dem in der Figur 1 gezeigten Grundzustand bleiben. In diesem Fall liegt an dem Drucksensor 24 der in der Luftfeder 2b, die der Radposition am "hinten links" zugeordnet ist, herrschende statische Luftdruck an. Entsprechend ist der Luftdruck in den anderen Luftfedern der Niveauregelanlage messbar. Das jeweilige Messergebnis des Drucksensors 24 wird an die Steuereinheit 10 übermittelt. Das übermittelte Messergebnis wird in der Steuereinheit der Luftfeder 2a, 2b zugeordnet, deren Quersperrventil 6a, 6b sie angesteuert hat, und ausgewertet. Wie dies im Einzelnen erfolgt, wird weiter unten näher erläutert.

Jedes Ventil 6a, 6b, 14 ist über eine Steuerleitung mit der Steuereinheit 10 verbunden. Über die entsprechende Steuerleitung wird jedes Ventil 6a, 6b, 14 für den Betrieb und einen Wechsel der Schaltstellung mit Spannung und Strom versorgt. Die an das Ventil 6a, 6b, 14 angelegte Spannung und der von jedem Ventil 6a, 6b, 14 aufgenommene Strom können von der Steuereinheit 10 bestimmt und ermittelt werden. Weiterhin kann in der Steuereinheit 10 eine Sollkurve, ein Kennlinienfeld und/oder mindestens ein Grenzwert für die Spannung und den Strom eines jeden Ventils 6a, 6b, 14 abgespeichert sein.

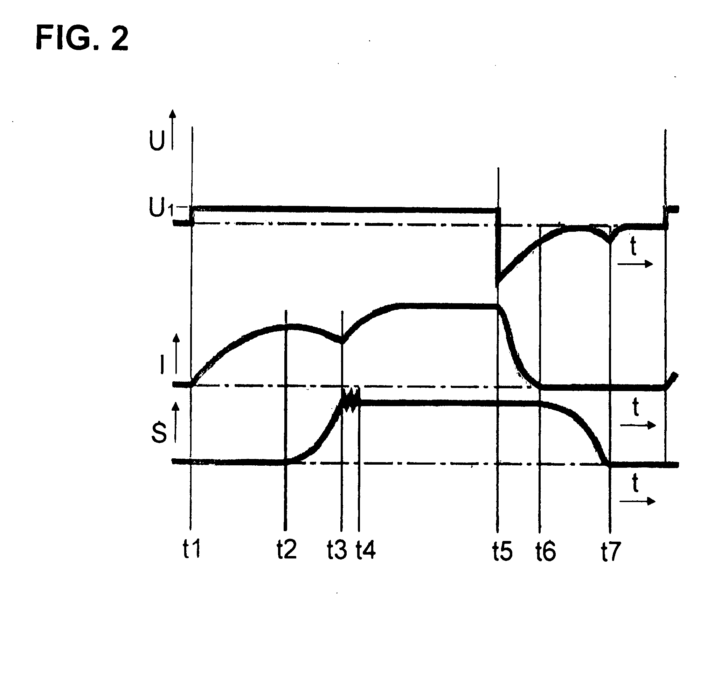

Im Zusammenhang mit Figur 2, welche die charakteristischen Kennlinien eines stromlos geschlossenen oder stromlos offenen Magnetventils in Diagrammform zeigt, wird im Folgenden erläutert, wie ein Diagnoseverfahren mit Hilfe der in der Figur 1 gezeigten Steuereinheit 10 durchgeführt wird. In dem Diagramm sind der Verlauf der Spannung U, des Stroms I und des Ankerweges S eines Magnetventils über der Zeit aufgetragen.

Zu einem ersten Zeitpunkt t1 wird eine Spannung U1 angelegt. Aufgrund der Massenträgheit des Ankers des Ventils und der eventuell auf den Anker des Ventils wirkenden Federkraft dauert es bis zum Zeitpunkt t2 bis der Anker von dem ersten Ventilsitz erstmals abhebt. Der Strom steigt vom Zeitpunkt t1 bis zum Zeitpunkt t2, der so genannten Anzugsverzugszeit, kontinuierlich an und erreicht zum Zeitpunkt t2 einen lokalen Maximalwert. Vom Zeitpunkt t2 bis zum Zeitpunkt t3, der so genannten Anzugszeit, hebt der Anker des Ventils vom ersten Ventilsitz ab und wird bis zum zweiten Ventilsitz bewegt, wobei das Ventil einen Wechsel seines Schalt-Zustandes durchgeführt hat und wobei der Strom in diesem Zeitraum kontinuierlich absinkt und zum Zeitpunkt t3 ein lokales Minimum erreicht.

Der Stromverlauf vom Zeitpunkt t1 bis zum Zeitpunkt t3 weist bei einem einwandfreien und funktionsfähigem Magnetventil einen charakteristischen Verlauf auf. Ist die Funktion des Ventils, insbesondere das vollständige Öffnen und aufliegen des Ankers auf dem zweiten Ventilsitz, beeinträchtigt, dann weichen die gemessenen Werte für das lokale Maximum und das lokale Minimum des Stroms von den Sollwerten eines einwandfreien Ventils deutlich ab und können für die Diagnose der Funktionsfähigkeit des Ventils herangezogen werden.

Vom Zeitpunkt t3 bis zum Zeitpunkt t4, der Prellzeit, kann der Anker ggf. mehrfach gegen den zweiten Ventilsitz "prellen", wobei die Stromaufnahme des Ventil bereits wieder kontinuierlich ansteigt. Nach der Prellzeit liegt der Anker des Ventils solange am zweiten Ventilsitz an, wie die Spannung U1 am Ventil anliegt, in diesem Fall ist das bis zum Zeitpunkt t5.

Zum Zeitpunkt t5 wird die Versorgungs-Spannung vom Ventil getrennt und fällt sehr stark bis zu einem lokalen Minimum aufgrund von Gegeninduktion ab. Danach steigt die Spannung kontinuierlich an, wobei nach einer bestimmten Zeit, hier Zeitpunkt t6, der Anker des Ventils vom zweiten Ventilsitz abhebt und kontinuierlich bis zum ersten Ventilsitz bewegt wird. Dabei erreicht die Spannung ein lokales Maximum und fällt zum Zeitpunkt t7, wenn der Anker des Ventils auf dem ersten Ventilsitz aufliegt, auf ein lokales Minimum zurück. Das lokale Maximum und das lokale Minimum des Spannungsverlaufs sind charakteristische Größen bei einem einwandfreien und funktionsfähigen Ventil. Ist die Funktion des Ventils, insbesondere das vollständige Schließen und aufliegen des Ankers auf dem ersten Ventilsitz, beeinträchtigt, dann weichen die gemessenen Werte für das lokale Maximum und das lokale Minimum der Spannung von den Sollwerten eines einwandfreien Ventils deutlich ab und können für die Diagnose der Funktionsfähigkeit des Ventils herangezogen werden.

Beim Abschaltvorgang des Magnetventils ist es zusätzlich möglich, den Stromverlauf vom Zeitpunkt t5 bis zum Zeitpunkt t6 zur Diagnose der Funktionsfähigkeit des Ventils heranzuziehen, denn erst zum Zeitpunkt t6, wenn der Stromverlauf nahezu den Wert Null erreicht hat, hebt der Anker von dem zweiten Ventilsitz ab. Diese Information verbessert die Diagnose der Funktionsfähigkeit des Ventils und liefert genauere Ergebnisse, da der Hubweg des Ankers von Anfang bis Ende anhand des Strom- und des Spannungsverlaufs verifiziert werden kann.

Jedes Magnetventil weist einen derartigen charakteristischen Verlauf für Spannung und Strom auf, so dass die Funktionalität des Ventils durch die Messung von Spannung und/oder Strom während des Einschalt- und/oder Ausschaltvorganges im Vergleich zu einer entsprechenden Sollkennlinie, einem Kennlinienfeld oder eines Grenzwertes beurteilt und ermittelt werden kann. Weicht ein gemessener Spannungs- und/oder Stromverlauf von den entsprechenden Sollwerten zu stark ab, dann hat sich der Anker des Ventils mit sehr großer Wahrscheinlichkeit nicht oder nicht richtig geöffnet oder ist nicht bzw. nicht richtig geschlossen worden.

Die korrekte Funktion eines stromlos geschlossenen oder eines stromlos offenen Magnetventils während des Einschaltvorgangs kann durch den Stromverlauf zwischen den Zeitpunkten t1 bis t4 sicher ermittelt werden. Die korrekte Funktion eines stromlos geschlossenen oder stromlos offenen Magnetventils während des Abschalt- oder Ausschaltvorgangs kann durch den Spannungsverlauf und ggf. unter Hinzuziehung des Stromverlaufs zwischen den Zeitpunkten t5 bis t7 sicher ermittelt werden.

### Bezugszeichenliste

### (Teil der Beschreibung)

- 1 -: Niveauregelanlage
- 2a, 2b -: Luftfeder
- 4a, 4b -: Leitung
- 6a, 6b -: Ventil
- 8 -: Leitung
- 10 -: Steuereinheit
- 12 -: Kompressor
- 14 -: Ablassventil
- 16,: 18, 20, 22 - Höhensensor
- 24 -: Drucksensor
- 26 -: Ventil
- t1 -: erster Zeitpunkt
- t2 -: zweiter Zeitpunkt
- t3 -: dritter Zeitpunkt
- t4 -: vierter Zeitpunkt
- t5 -: fünfter Zeitpunkt
- t6 -: sechster Zeitpunkt
- t7 -: siebter Zeitpunkt
- U -: Spannung
- U1 -: Spannungswert
- I -: Strom
- S -: Weg (des Ankers)

## Patentansprüche

1. Verfahren zur Steuerung und/oder Regelung des Niveaus eines Fahrzeugaufbaus eines Kraftfahrzeuges mittels einer Niveauregelanlage (1) mit mindestens einem Stellglied (2a, 2b) mit dem das Niveau des Fahrzeugaufbaus durch einen Höhenänderungsvorgang veränderbar ist, mit einem dem Stellglied (2a, 2b) zugeordneten Ventil (6a, 6b, 14,), wobei bei einem Höhenänderungsvorgang das Niveau bei geöffnetem Ventil (6a, 6b, 14, 16) durch Hinzufügen von Druckmittel zu dem Stellglied (2a, 2b) erweiterbar oder durch Ablassen von Druckmittel aus dem Stellglied (2a, 2b) absenkbar ist, und mit einer Steuereinheit (10), die über entsprechend Steuerleitungen jedes Ventil (6a, 6b, 14) für den Betrieb und für einen Wechsel der Schaltstellung mit Spannung und Strom versorgt, wobei die am jeweiligen Ventil (6a, 6b, 14) angelegte Spannung und der aufgenommene Strom von der Steuereinheit (10) bestimmt und ermittelt wird, in den folgenden Verfahrensschritten:
- das Niveau des Fahrzeugaufbaus gegenüber einem Bezugspunkt wird ermittelt,
- es wird ein Höhenänderungsvorgang eingeleitet, wenn das ermittelte Niveau unterhalb oder oberhalb eines vorgegebenen Niveaus liegt,
- nach Einleitung des Höhenänderungsvorganges wird in der Steuereinheit (10) überprüft, ob sich das Ventil (6a, 6b, 14,) geöffnet hat, und
- die Steuereinheit (10) bricht den Höhenänderungsvorgang ab, wenn sich das Ventil (6a, 6b, 14,) nicht oder nicht vollständig geöffnet hat,
wobei das Öffnungsverhalten des Ventils (6a, 6b, 14, 16) aus dem Stromverlauf (I) des Ventils (6a, 6b, 14,) zu Beginn des Einschaltvorganges dadurch ermittelbar ist, dass eine Beeinträchtigung der Ventilfunktion dann diagnostiziert wird, wenn die gemessenen Werte für das lokale Minimum und das lokale Maximum des Stroms von den Sollwerten eines einwandfrei arbeitenden Ventils abweichen.

2. Verfahren nach Anspruch 1, **dadurch gekennzeichnet, dass** der gemessene Stromverlauf (I) des Ventils (6a, 6b, 14,) ein Maß für den Hubweg (S) eines Ankers des Ventils (6a, 6b, 14,) darstellt.

3. Verfahren nach einem der Ansprüche 1 oder 2, **dadurch gekennzeichnet, dass**
- das Ventil (6a, 6b, 14,) von seinem geschlossenen Zustand in den geöffneten Zustand oder von seinem geöffenten in den geschlossenen Zustand überführt wird,
- der Stromverlauf (I) des Ventils (6a, 6b, 14,) während des Einschaltvorgangs gemessen wird,
- der gemessene Stromverlauf (I) in der Steuereinheit (10) mit einer Stromsollkurve, einem Strom-Kennlinienfeld oder einem Strom-Grenzwert verglichen wird,
- anhand des Vergleichs in der Steuereinheit (10) ermittelbar ist, ob das Ventil (6a, 6b, 14,) von dem geschlossenen in den geöffneten Zustand oder von dem geschlossenen in den geöffneten Zustand überführt worden ist.

4. Verfahren nach Anspruch 2 oder 3, **dadurch gekennzeichnet, dass** das Öffnungsverhalten des Ventils (6a, 6b, 14,) aus dem Stromverlauf (I) des Ventils (6a, 6b, 14,) während der Anzugsverzugszeit und /oder der Anzugszeit ermittelbar ist.

## Claims

1. Method for open-loop and/or closed-loop control of the level of a vehicle body of a motor vehicle by means of a level control system (1) comprising at least one actuator (2a, 2b), by means of which the level of the vehicle body can be varied through a height changing operation, comprising a valve (6a, 6b, 14) assigned to the actuator (2a, 2b), the level, during a height changing operation, when the valve (6a, 6b, 14) is open, being able to be made greater through addition of pressure medium to the actuator (2a, 2b) or able to be lowered through discharging of pressure medium from the actuator (2a, 2b), and comprising a control unit (10) which supplies each valve (6a, 6b, 14) with voltage and current for operation and for a change of the switching position via corresponding control lines, the voltage which is applied to the respective valve (6a, 6b, 14) and the consumed current being defined and determined by the control unit (10), in the following method steps:
- the level of the vehicle body in relation to a reference point is ascertained,
- a height changing operation is initiated if the ascertained level is below or above a predefined level,
- after initiation of the height changing operation, it is checked in the control unit (10) whether the valve (6a, 6b, 14) has opened, and
- the control unit (10) terminates the height changing operation if the valve (6a, 6b, 14) has not opened or has not opened fully, where the opening behavior of the valve (6a, 6b, 14) can be ascertained from the electric current progression (I) of the valve (6a, 6b, 14) at the start of the switching-on operation by the fact that an impairment of the valve function is diagnosed when the measured values for the local minimum and the local minimum of the current deviate from the setpoint values of a valve which is operating satisfactorily.

2. Method according to Claim 1, **characterized in that** the measured electric current progression (I) of the valve (6a, 6b, 14) constitutes a measure of the travel (S) of an armature of the valve (6a, 6b, 14).

3. Method according to either of Claims 1 and 2, **characterized in that**
- the valve (6a, 6b, 14) is brought from its closed state into the open state or from its open state into the closed state,
- the electric current progression (I) of the valve (6a, 6b, 14) is measured during the switching-on operation,
- in the control unit (10), the measured electric current progression (I) is compared with an electric current reference curve, a family of electric current characteristics or an electric current limit value,
- it can be ascertained in the control unit (10), on the basis of the comparison, whether the valve (6a, 6b, 14) has been brought from the closed into the open state or from the open into the closed state.

4. Method according to Claim 2 or 3, **characterized in that** the opening behavior of the valve (6a, 6b, 14) can be ascertained from the electric current progression (I) of the valve (6a, 6b, 14) during the pickup delay time and/or the pickup time.

## Revendications

1. Procédé de commande et/ou de régulation de l'assiette de la caisse d'un véhicule automobile au moyen d'une installation de régulation d'assiette (1) comprenant au moins un actionneur (2a, 2b) avec lequel l'assiette de la caisse du véhicule peut être modifiée par une opération de variation de hauteur, une soupape (6a, 6b, 14) associée à l'actionneur (2a, 2b), dans lequel, lors d'une opération de variation de hauteur, l'assiette lorsque la soupape (6a, 6b, 14) est ouverte peut être élargie par apport de fluide sous pression à l'actionneur (2a, 2b) ou peut être abaissée par échappement de fluide sous pression hors de l'actionneur (2a, 2b), et une unité de commande (10) qui, par le biais de conduites de commande correspondantes, alimente chaque soupape (6a, 6b, 14) pour le fonctionnement et pour un changement de position de commutation avec une tension et un courant, la tension appliquée à chaque soupape (6a, 6b, 14) et le courant reçu par l'unité de commande (10) étant déterminés et détectés, dans les étapes de procédé suivantes :
- l'assiette de la caisse du véhicule est déterminée par rapport à un point de référence,
- une opération de variation de hauteur est amorcée, lorsque l'assiette déterminée se situe en dessous ou au-dessus d'une assiette prédéfinie,
- après l'amorçage de l'opération de variation de hauteur, on vérifie dans l'unité de commande (10) si la soupape (6a, 6b, 14) s'est ouverte, et
- l'unité de commande (10) interrompt l'opération de variation de hauteur si la soupape (6a, 6b, 14) ne s'est pas ouverte ou ne s'est pas ouverte complètement,
le comportement d'ouverture de la soupape (6a, 6b, 14) pouvant être déterminé à partir de l'allure du courant (I) de la soupape (6a, 6b, 14) au début de l'opération d'enclenchement, par le fait qu'une influence négative de la fonction de la soupape est diagnostiquée lorsque les valeurs mesurées pour le minimum local et le maximum local du courant s'écartent des valeurs de consigne d'une soupape fonctionnant parfaitement.

2. Procédé selon la revendication 1, **caractérisé en ce que** l'allure mesurée du courant (I) de la soupape (6a, 6b, 14) constitue une mesure de la course de levage (S) d'une armature de la soupape (6a, 6b, 14).

3. Procédé selon l'une quelconque des revendications 1 ou 2, **caractérisé en ce que**
- la soupape (6a, 6b, 14) est transférée de son état fermé dans l'état ouvert ou de son état ouvert dans l'état fermé,
- l'allure du courant (I) de la soupape (6a, 6b, 14), pendant l'opération d'enclenchement, est mesurée,
- l'allure du courant (I) mesurée est comparée dans l'unité de commande (10) avec une courbe de consigne de courant, un champ caractéristique de courant ou une valeur limite de courant,
- à l'aide de la comparaison, on peut déterminer dans l'unité de commande (10) si la soupape (6a, 6b, 14) a été transférée de l'état fermé dans l'état ouvert ou de l'état ouvert dans l'état fermé.

4. Procédé selon la revendication 2 ou 3, **caractérisé en ce que** le comportement d'ouverture de la soupape (6a, 6b, 14) peut être déterminé à partir de l'allure du courant (I) de la soupape (6a, 6b, 14), pendant le temps de retard d'attraction et/ou le temps d'attraction.
